# EUROPEAN PATENT SPECIFICATION

(11) **EP 2 834 571 B1**
(45) Date of publication and mention of the grant of the patent: **27.12.2017**
(21) Application number: 13710863.5
(22) Date of filing: 21.03.2013
(51) Int. Cl.: B32B 7/12, F24F 13/02, B32B 15/04, B32B 15/20, C09D 5/00, C09D 7/12, C08K 3/36, C08K 9/06, C09D 5/16

(54) **PANEL MADE OF PRE-INSULATED MATERIAL FOR MANUFACTURING AN AIR DISTRIBUTION DUCT AND PROCESS FOR THE PREPARATION THEREOF**
AUS VORISOLIERTEM MATERIAL HERGESTELLTES PANEEL ZUR HERSTELLUNG EINER LUFTVERTEILUNGSLEITUNG UND VERFAHREN ZUR HERSTELLUNG DAVON
PANNEAU CONSTITUÉ DE MATÉRIAU PRÉISOLÉ POUR LA FABRICATION D'UN CONDUIT DE DISTRIBUTION D'AIR ET PROCÉDÉ DE PRÉPARATION DE CELUI-CI

(30) Priority: 23.03.2012 IT MI20120463
(43) Date of publication of application: 11.02.2015
(73) Proprietor: P3 S.r.l., 35010 Ronchi di Villafranca Padovana (PD) (IT)
(72) Inventor: TEMPORIN, Antonio, I-35010 Villafranca Padovana (PD) (IT); MELA, Nicola, I-35010 Villafranca Padovana (PD) (IT); TOMASI, Giampaolo, I-35010 Villafranca Padovana (PD) (IT)
(74) Representative: Porta, Checcacci & Associati S.p.A
(86) International application number: PCT/EP2013/055898
(87) International publication number: WO 2013/139891

(56) References cited:
- WO-A2-02/066877
- WO-A2-2011/038325
- GB-A- 2 421 727
- US-A1- 2003 236 043
- US-A1- 2004 137 181
- US-A1- 2005 272 338
- US-A1- 2008 268 233
- US-A1- 2011 076 478

## Description

### Background of the invention

The present invention relates to a panel made of pre-insulated material superficially provided with a nanotextured and hydrophobic coating, capable of reducing the surface depositing of dust and solid particulate, which therefore allows to obtain a self-cleaning effect inside an air distribution duct comprising such panels.

In particular, the present invention relates to panels made of pre-insulated material superficially provided with a nanotextured and hydrophobic coating used for manufacturing ducts for ventilation, heating and air conditioning systems.

The present invention also relates to a process for preparing such panels and to a process for manufacturing ducts comprising such panels.

### Prior art

The use of pre-insulated panels for manufacturing ducts for conditioning, ventilation and heating systems is widely known in the field.

In the present context, the term "pre-insulated panel" is intended to indicate a composite panel provided with an insulating material before the panel is mounted to form ducts or in any case before being used.

Generally, insulated panels, suitably cut and assembled, are used to form air distribution ducts at a medium/low pressure and at a low rate. Document WO-02/066877-A discloses for example a panel made of pre-insulated material for manufacturing an air distribution duct comprising an insulating layer interposed between opposite surface layer, at least one of said surface layers being superficially provided with a nano-textured and hydrophobic coating. The international patent application WO 2011/038325 describes a dust-repellent composition comprising hydrophobic nanoparticles dispersed in at least one solvent, wherein the composition is free of at least one binder which is deemed could compromise the coating efficacy. In particular, the above composition is applied to fan blades.

The English patent GB 2 421 727 discloses a method for preparing a coating material capable of forming a microstructured surface comprising: 1) providing micro or nanoparticles and 2) treating the particles with a hydrophobic agent and with an additive to form larger particles with the hydrophobic agent bonded thereto, wherein the step of treating the particles with the additive is carried out at a pH of about 6.5-14. In particular, the above coating material can be used for producing self-cleaning, anticorrosive or anti-ice coatings.

US 2008/0268233 describes compositions that include a polymer having a water contact angle of between about 120° and about 150° or greater adhered to a 1 nm to about a 25 micron diameter sized particle optionally with an oxide layer. In particular, the particle is a silica, which has been pretreated with a silane.

### Summary of the invention

In connection with the pre-insulated panels for manufacturing air distribution ducts, the Applicant observed that these ducts require frequent cleaning and renovation due to the accumulation of dust and solid particulate inside the same duct, thus triggering an undesired increase of the costs for maintenance and for checking the ducts.

In view of the significant impact that air quality has on people's health, also the technical and law regulations that regulate the field have recorded, over the past few years, a significant tightening of the standards required for the air conditioning systems assessed as a whole, i.e. also comprising the channelling network ("Guidelines defining technical protocols of predictive maintenance on air conditioning system" of the Ministry of Health - Official Gazette of November 3, 2006 and UNI EN 15780 Standard, Ventilation for buildings - Ductwork - Cleanliness of ventilation systems).

The traditional products capable of offering a barrier against dust and more in general against the deposition of dirt or solid particulate use solutions based on antistatic effect or hydrophobic effect, using the effect of some compounds such as those fluorine based or the teflonized polymers. However, these treatments are not suitable for the particular requirements of air distribution ducts.

The Applicant has therefore set itself the problem of providing a pre-insulated panel capable of effectively reducing the possible depositions and accumulations of dust and solid particulate by means of a nanotextured and hydrophobic, dust-repellent coating, obtained starting from a liquid coating composition according to the invention.

More particularly, according to a first aspect, the present invention relates to a panel made of pre-insulated material for manufacturing an air distribution duct comprising an insulating layer interposed between opposite surface layers, at least one of said surface layers being superficially provided with a nanotextured and hydrophobic coating obtained from a liquid composition comprising:
a) from 10 to 70% by weight of a formulation comprising a mixture of hydrophobic silica particles, at least one organosilane and at least one solvent;
b) from 20 to 60 % by weight of at least one polymeric resin; and
c) optionally from 0.1 to 2 % by weight of at least one biocide.

Advantageously, the pre-insulated panel superficially provided with a coating according to the invention allows to reduce the possible depositions and accumulations of dust and solid particulate on the treated surface, only through the action of the air flow both in the prestart and in the operating step, so as to allow a self-cleaning action inside the same duct.

The above self-cleaning action advantageously allows to facilitate and/or reduce the frequency of the maintenance and renovation operations of the same duct. The Applicant deems, without however wishing to be bound by any interpretative theory, that the nanotextured and hydrophobic coating obtained on the pre-insulated panel allows to create a lotus effect capable of minimising the contact surface of the dust particles and solid particulate and at the same time reducing the presence of surface humidity which has an adhesive action on the same particles, so as to reduce the dirt adhesion capability on said panel.

Within the framework of the description and in the subsequent claims, the term: lotus effect indicates the capability of a material to remain self-cleaning.

Within the framework of the description and in the subsequent claims, the term: nanotextured indicates a coating layer which has a second roughness level on a nanometric scale, characterised by a high density of summits and bottoms with respect to the nominal profile of the same surface.

Within the framework of the description and in the subsequent claims, the term: hydrophobic indicates a coating layer having a water contact angle greater than 90°, measured after conditioning the specimens at an average temperature of 21 °C for 4h.

Within the framework of the present description and in the subsequent claims, except where otherwise indicated, all numbers expressing amounts, parameters, percentages, and so forth, are to be understood as being preceded in all instances by the term "about". Also, all ranges of numerical entities include all the possible combinations of the maximum and minimum numerical values and all the possible intermediate ranges therein, in addition to those specifically indicated hereafter.

Preferably, the coating thickness is comprised between 1 and 10 µm corresponding to an amount comprised between 1 and 10 g/m², preferably 2-3 g/m².

In a preferred embodiment, at least one of the opposite surface layers of the panel according to the invention comprises an aluminium sheet.

Preferably, at least one of said surface layers has a smooth or embossed surface.

Preferably, said surface layers have a thickness comprised between 60 and 500 µm, more preferably a thickness equal to 60, 80, 200 and 500 µm.

Preferably, the insulating layer of the panel according to the present invention comprises at least one of the materials selected from the group comprising: expanded polyurethane, expanded polyisocyanurate, phenolic foam and mineral wools. More preferably, expanded polyurethane/polyisocyanurate.

Preferred examples of expanded polyurethane which may be used in the present invention and which are available on the market are the continuous lamination products by Bayer, BASF, Huntsman, Dow, which produce a stiff expanded polyurethane foam PUR/PIR, Class 1 of the fire reaction classification according to UNI EN 9174, preferably expanded only with water according to US patent application N. 2001/014387 A1.

Preferably, said insulating layer has a density comprised between 40 and 70 kg/m³ and a thickness comprised between 10 and 60 mm.

Preferably, the liquid composition has a pH comprised between 2 and 5, more preferably comprised between 2.70 and 4.20.

Within the framework of the description and in the subsequent claims, the term: particles indicates nanoparticles or microparticles.

Within the framework of the description and in the subsequent claims, the term: microparticle indicates aggregates or clusters of the nanoparticles mentioned above.

Within the framework of the description and in the subsequent claims, the term: microparticles indicates particles having an average particle size comprised between 0.1 µm and 100 µm.

Within the framework of the description and in the subsequent claims, the term: nanoparticles indicates particles having an average particle size comprised between 1 nm and 100 nm.

In a preferred embodiment, the particles are microparticles, nanoparticles or mixtures thereof having an average particle size comprised between 1 nm and 100 µm.

Preferably, the particles have an average particle size comprised between 50 nm and 50 µm.

The particles may be spheroid or non spheroid, for example particles having an irregular shape. The term "average particle size" refers to the size of the primary particles and is not the size of agglomerates. The particle size is generally the average diameter of a spheroid particle and approximately the largest size of an acicular particle.

Within the framework of the description and in the subsequent claims, the term: hydrophobic silica particles indicates silica particles superficially hydrophobized by suitable hydrophobizing modifiers according to the techniques well known to a man skilled in the art.

Within the framework of the description and in the subsequent claims, the term: hydrophobizing modifier indicates a hydrophobic compound, such as for example an organosilane or an alkylsilane, capable of making the surface of the silica particles hydrophobic and suitably selected to ensure the hydrolysis and condensation reactions during the coating forming process.

In a preferred embodiment, the silica particles are selected from the group comprising fumed silica, precipitated silica or mixtures thereof.

In a preferred embodiment, the hydrophobizing modifiers of the silica particles are selected from the group comprising organosilanes and alkylsilanes.

Preferably, the organosilanes are selected from the group comprising alkylchlorosilanes, alkoxysilanes, methyltrimethoxysilane, dimethyldimethoxysilane, trimethylmethoxysilane, methyltriethoxysilane, dimethyldiethoxysilane, trimethylethoxysilane, ethyltrimethoxysilane, ethyltrietoxysilane, n-propyltrimethoxysilane, n-propyltrietoxysilane, i-propyltrimethoxysilane, i-propyltrietoxysilane, butyltrimethoxysilane, butyltrietoxysilane, hexyltrimetoxysilane, octyltrimethoxysilane, 3-mercaptopropyltrimethoxysilane, n-octyltrietoxysilane, phenyltriethoxysilane, polytrietoxysilane, trialcoxyarylsilanes, isooctyltrimethoxysilane, N-(3-triethoxysilylpropyl)methoxyethoxyethoxyethyl carbammate, polydialkylsiloxanes, polydimethylsiloxanes, methyltriacetoxysilane, dimethyldiacetoxysilane, trimethylacetoxysilane, vinyltrichlorosilane, vinylmethyldichlorosilane, vinyldimethylchlorosilane, vinyltrimethoxysilane, vinylmethyldimethoxysilane, vinyldimethylmethoxysilane, vinyltriethoxysilane, vinylmethyldictoxysilane, vinyldimethyletoxysilane, substituted and non-substituted arylsilanes and mixtures thereof. Preferred examples of fumed silica particles which may be used in the present invention and which are available on the market are the products Aerosil® (Evonik), preferably Aerosil® R202, R805, R972 and R974.

The substituted and non-substituted alkylsilanes comprise substituted methoxy and hydroxy alkylsilanes and mixtures thereof.

The hydrophobic silica particles advantageously have the dual function of creating a rough and hydrophobic surface, by virtue of the different diameters of the particles and of the presence of the hydrophobizing modifiers, capable of significantly contributing to the dust repellent effect of the panel according to the invention.

Advantageously, the hydrophobic silica particles are exposed on the outer surface of the coating, thus allowing a microtextured, hydrophobic and thus dust repellent coating to be obtained.

In a preferred embodiment, the organosilane is an alkoxysilane. Preferably, tetraethoxysilane and methyltriethoxysilane.Advantageously, the organosilanes have the dual function of vehiculating the silica particles as well as contributing to the coating forming together with the polymeric resin, increasing the mechanical characteristics thereof.

Moreover, the organosilanes advantageously contribute on the one hand to anchor the coating to the treated panel, and on the other hand to obtain condensation reactions between the dispersed silica particles, so as to constitute larger sized clusters, which then contribute to constituting the nanotextured surface responsible for the lotus effect.

In a further preferred embodiment, the polymeric resin is selected from the group comprising epoxy, phenolic, vinyl, acrylic resin, polyester and mixtures thereof. Preferably, epoxy resin. Preferred examples of resins which may be used in the present invention and which are available on the market are the products Stoving lacquer blue (Actega) and Dinapol® L 205 (Degussa).

The polymeric resin advantageously has the function of creating a resistant coating and of specifically contributing to increasing the coating adhesion to the treated panel surface.

Preferably, the solvents that may be used in the present invention for preparing the coating are selected from the group comprising polar solvents such as ketones, preferably acetone and methylethylketone (MEK) and non-polar solvents such as pentane, cyclopentane, hexane, cyclohexane, benzene and toluene and mixtures thereof.

In this way, the solvents advantageously allow the best chemical compatibility conditions to be created between the different components, and in particular the condensation reaction of the organosilanes to be favoured, which occurs during the drying of the coating composition, facilitating the correct elimination of the reaction products.

Preferably, the biocides that may be used in the present invention for preparing the coating are selected from the group comprising zinc pyrithione (ZnP), isothiazolinone and its derivatives, imidazole and its derivatives, silver in ionic and/or metallic form, other metallic ion-based products comprising copper, zinc and silver ions, quaternary salts of ammonium, triclosan, oxybisphenoxyarsine (OBPA) and mixtures thereof.

The Applicant has experimentally found that thanks to the addition of at least one biocide to the coating composition, it is possible to provide a coating that is not only capable of reducing the possible depositions and accumulations of dust and solid particulate, but is also capable of carrying out an inhibitory action against the microbial proliferation on the inner surfaces of the same duct.

The antimicrobial effect was verified, by way of example, by the tests according to ISO 22196 (E. Coli/S. Aureus/Legionella Pneumophila), AATCC 30 (A. Niger/T. Virens).

The laboratory tests run on the panels according to the invention confirmed that the wide range antimicrobial activity also lasts after the accelerated aging tests, carried out by simulating the 20 cleaning cycles with nylon brushes as required by the UNI EN 13403.

According to a second aspect thereof, the present invention relates to an air distribution duct comprising at least one panel made of pre-insulated material as described above.

Preferably, the ducts according to the invention are used for ventilation, heating and air conditioning systems.

Preferably, the duct has a quadrangular, rectangular or octagonal section. According to a third aspect thereof, the present invention relates to a liquid composition for coating a panel made of pre-insulated material, comprising:
a) from 10 to 70% by weight of a formulation comprising a mixture of hydrophobic silica particles, at least one organosilane and at least one solvent;
b) from 20 to 60 % by weight of at least one polymeric resin; and
c) optionally from 0.1 to 2 % by weight of at least one biocide.

Advantageously, the coating composition according to the invention allows to obtain an even coating, resistant to the normal scratching/abrasion actions due to maintenance and inside duct cleaning with brushes and lasting over time.

Further preferred features of the coating composition according to the invention are described in the dependent claims, whose contents are fully incorporated herein for reference.

According to a fourth aspect thereof, the present invention relates to the use of a composition as described above for preparing a nanotextured and hydrophobic coating of a panel made of pre-insulated material.

According to a fifth aspect thereof, the present invention relates to the use of a composition as described above for reducing the surface deposition of dust and solid particulate inside an air distribution duct.

According to a sixth aspect thereof, the present invention relates to a process for manufacturing panels made of pre-insulated material, comprising the steps of:
a₁) providing a first aluminium sheet;
b₁) providing a liquid coating composition as described above;
c₁) applying said composition onto a face of said first sheet, at a temperature comprised between 15°C and 40°C, so as to obtain a wet coating layer with controlled weight;
d₁) drying the coating layer obtained at a temperature comprised between 90° and 220 °C for a time comprised between 10 and 30 seconds so as to obtain a face coated with said first sheet;
e₁) providing a second aluminium sheet;
f₁) associating said first and second aluminium sheet with an insulating layer, so that the face coated with said first sheet forms an outer face of the panel.

In a preferred embodiment, step c₁) of applying the composition according to the invention is carried out by means of the roll coating, spin coating, dip coating, spray coating or bar coating technique, preferably roll coating.

The roll coating process uses a draft tank and steel/rubber rolls for semiflexo system capable of applying the liquid product in an amount comprised between 1 and 30 g/m² at a temperature between 10 °C and 40 °C. Preferably, the process speed is comprised between 30 and 120 m/min, preferably 80 m/min.

In a preferred embodiment, the process for manufacturing panels according to the invention further comprises, upstream of step c₁), the step of applying onto the face of said first sheet, which will be in contact with the insulating layer, a primer for coupling with said insulating layer.

Preferably, the primer for coupling with the insulating layer is a vinyl heat sealing lacquer for coupling with the expanded polyurethane/polyisocyanurate. Preferably, the amount of primer used is 1 g/m².

Advantageously, the coupling of said insulating layer made of expanded polyurethane/stiff polyisocyanurate with said first and second sheet occurs without using adhesives, but with a continuous process through a chemical reaction into a dual conveyor belt where said first coated sheet, said second sheet and the liquid components of the insulating layer are placed, which are dosed through the production plant at a low/high pressure and suitably distributed on the uncoated face of said first sheet at a constant temperature comprised between 20 and 30 °C. The temperature of the dual belt plates is adjusted through air conditioning and is comprised between 35 and 50 °C. As an alternative, even though less preferred, a discontinuous process may be used.

The distance set between the plates of the dual belt determines the end panel thickness. Preferably, the panel is produced with a width of 1.22 m and then cut to size (preferably 1.20 m x 4.00 m) by means of, for example, an automatic cutter.

According to a seventh aspect thereof, the present invention relates to a process for manufacturing air distribution ducts comprising the steps of providing at least one panel made of pre-insulated material as described above.

In a preferred embodiment, said process further comprises the step i) of making suitable weakening lines on the panel and the step ii) of suitably bending the panel according to a bending line transversal to the weakening lines, optionally applying an amount of adhesive at the weakening lines so as to increase the duct stability.

In the present context, the term "weakening line" indicates a line obtained by removing material by means of partial cutting, that is a cut that does not cross the entire thickness of the panel, but is made starting from one of its faces up to a predetermined depth which is smaller than the thickness of the panel.

In a preferred embodiment, the process for manufacturing air distribution ducts according to the invention further comprises the step of associating said at least one panel with one or more panels made of pre-insulated material so as to form a duct.

Preferably, the joining of end portions of one or more panels according to the invention, so as to form a duct, it is for example possible to use adhesives, adhesive tapes, plastic section bars and joining devices as described for example in the international patent application WO 2009/052893, in the name of the same Applicant, whose contents are fully incorporated herein for reference.

Preferably, the various duct sections are then jointed for example by the arrangement of flanges along the perimeter of the two surfaces to be jointed. Such flanges are then connected by an outer or inner aluminium bayonet. As an alternative to the flanges it is possible to use a joining system by arranging frames as described in the Italian utility model application MI2011U000001, in the name of the same Applicant, whose contents are fully incorporated herein for reference.

### Brief description of the figures

Additional features and advantages of the invention will become more clearly apparent by the following description of some preferred embodiments thereof, given hereinbelow by way of illustration and not of limitation, with reference to the attached drawings. In such drawings:
- figure 1 shows a perspective view, in partial exploded view, of a panel according to an aspect of the invention;
- figures 2a and 2b show a schematic perspective view, in partial cross-section and in partial exploded view and in enlarged scale, of a duct according to an aspect of the invention with octagonal and rectangular section;
- figure 3 shows a diagram of the process for manufacturing panels made of pre-insulated material according to an aspect of the invention;
- figures 4a and 4b show an analysis obtained by an atomic force microscope (AFM) relating to an aluminium specimen provided with a coating according to the invention (4a) and to a comparative uncoated aluminium specimen (4b).

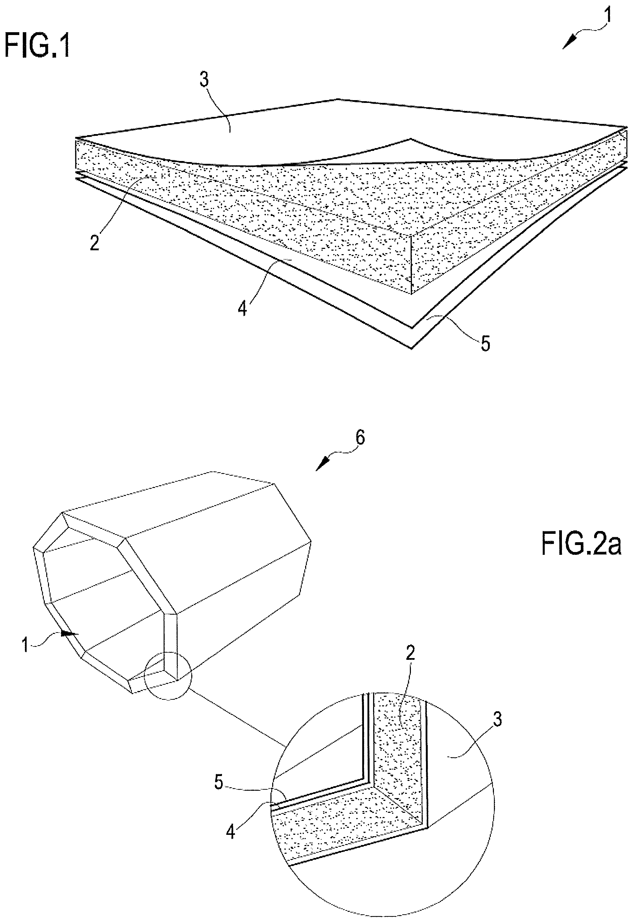

With reference to **figure 1****,** a panel made of pre-insulated material according to the invention, comprising an insulating layer 2 interposed between opposite surface layers 3 and 4, wherein at least one of said surface layers is superficially provided with a nanotextured and hydrophobic coating 5 according to an aspect of the invention, is entirely indicated by 1.

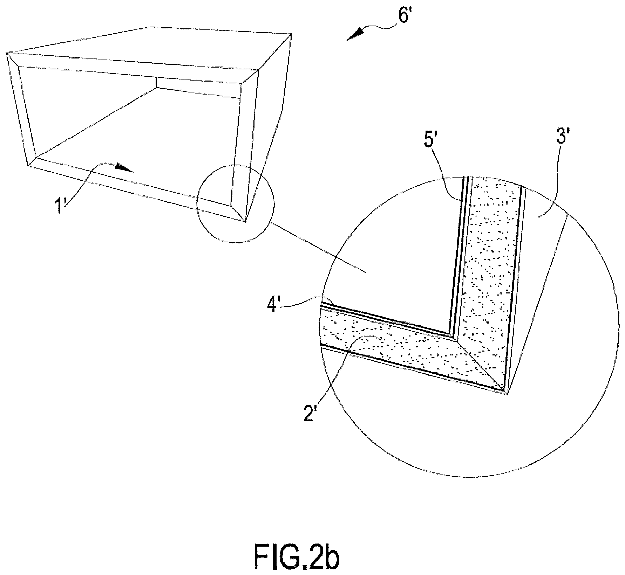

As schematically shown in **figure 2a** **and** **2b****,** reference numerals 6 and 6' globally indicate a duct with octagonal 6 and rectangular 6' section for air distribution according to a further aspect of the invention comprising at least one panel 1 and 1' made of pre-insulated material as described above.

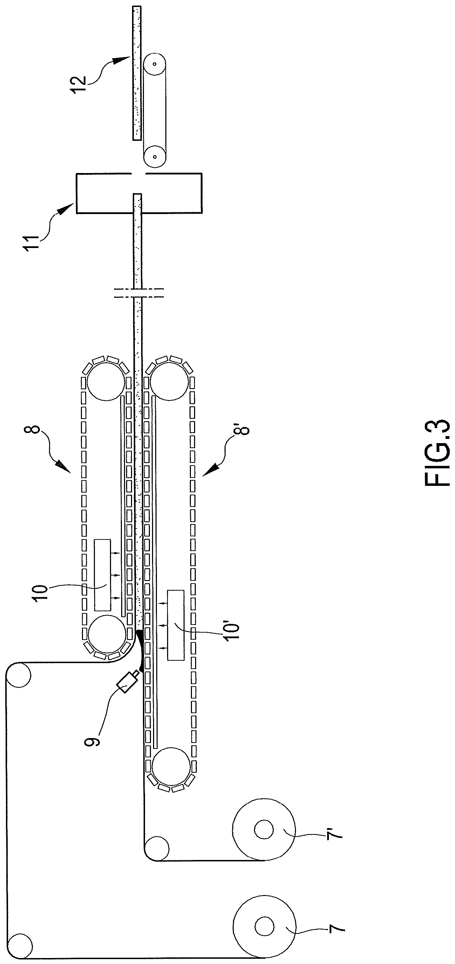

As schematically shown in **figure 3****,** the process for manufacturing panels made of pre-insulated material according to an aspect of the invention takes place through a continuous process wherein a first aluminium sheet with a coated face coming from reel 7' and a second uncoated sheet coming from reel 7 are placed on a dual conveyor belt 8' and 8 and then coupled with the liquid components of the insulating layer which are dosed through the production plant at a high/low pressure 9 and suitably distributed on the uncoated face of said first sheet at a constant temperature comprised between 20 and 30 °C. The temperature of the plates of the dual belt 8' and 8 is adjusted through air conditioning 10' and 10 and is comprised between 35 and 50 °C.

Once formed, the panel according to the invention is cut to size by means of, for example, an automatic cutter 11, obtaining panels 12 (preferably 1.20 m x 4.00 m).

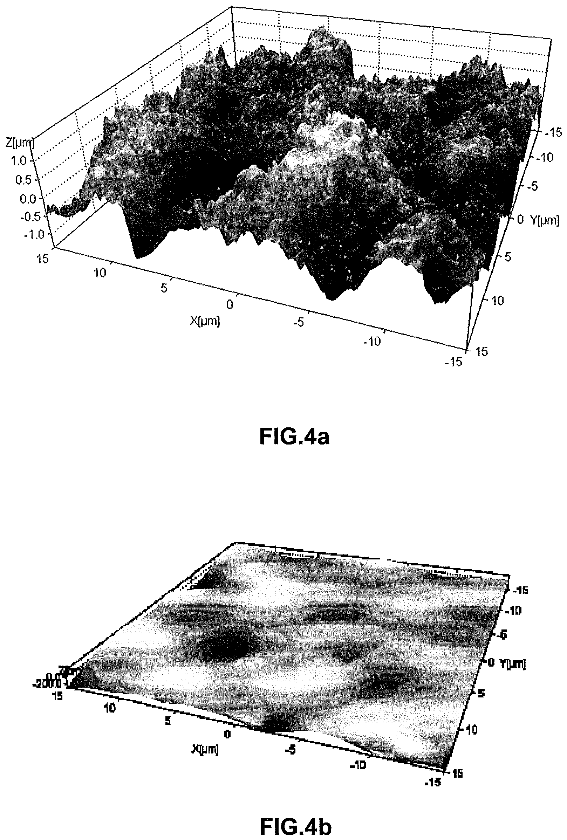

More preferably, **figures** 4a and 4b show the analyses carried out by atomic force microscope (AFM - Atomic Force Microscope - Nt-Mdt Solver) of an aluminium specimen provided with a coating according to the invention (4a) and of a comparative uncoated specimen (4b). The measurements were made on a range of 30 x 30 µm, with a resolution of about 100 nm, in two different positions of the specimen. The above analyses showed density values of summits S_{ds} (Density of Summits [1/µm²]), for the aluminium surface treated with the coating according to the present invention, 40 times greater than the same uncoated surface, indicating the capability of creating a complex surface structure with average roughness values Sₐ (Average Roughness [nm]) of the treated specimen 5-6 times greater than the comparative specimen.

### EXAMPLE 1

### a) Preparation of a liquid coating composition according to the invention

A liquid coating composition according to the invention was prepared as follows. 58.1% by weight with respect to the total liquid composition of a formulation comprising a mixture of hydrophobic silica particles, at least one organosilane and at least one solvent (Silaneat A200-EP11, Cimteclab S.pA.), previously homogenised and kept under stirring at room temperature and 0.6 % by weight with respect to the total liquid composition of a zinc pyrithione or imidazole based biocide were loaded into a mixer. An epoxy resin (Stoving lacquer blue - ACTEGA) was added to this mixture in small doses so as to avoid phenomena of precipitation and/or flocculation, keeping the blend under stirring at a speed of about 400 rev/min up to reach a concentration of the epoxy resin equal to 41.3% by weight with respect to the total liquid composition.

The liquid mixture thus obtained was kept under stirring for at least 10 minutes at a rotation speed of 400 rev/min so as to obtain a homogeneous result by performing repeated visual inspections.

At the end of this step, the dynamic viscosity of the blend realized was verified using a Ford-4 cup and optionally it was adjusted by adding acetone to obtain an optimum range of 15-20 seconds. b) Application of the liquid composition of step a) on a face of an aluminium sheet.

The liquid composition obtained from step a) was transferred to a lacquering plant.

An amount of about 8.5 g/m² of the composition was then deposited at room temperature (25 °C) on an aluminum sheet at a feeding speed of the lacquering plant of about 80 m/min.

At the end of the lacquering phase, the aluminum sheet coated with the composition according to the invention has been dried in an oven at a temperature of about 200 °C to obtain a dry coating of basis weight of 2-3 g/m².

### EXAMPLE 2

### (Evaluation of the self-cleaning activity of the panels according to the invention - laboratory tests)

Laboratory tests, carried out to test the effectiveness of the coating according to the invention, were intended to simulate a passage of air flow on surfaces previously polluted with two types of dust: the first one consisting of finely ground polyurethane (PU) foam dust (strongly electrostatic dust and particularly difficult to remove, adapted to simulate the dirtying of the panels during cutting and machining for the manufacturing of ducts) and the second one of a type of hygroscopic "dirt", simulating construction site dusts (cement, plasterboard, etc.), alumina dust with controlled particle size (average particle diameter of about 15 µm) was chosen in this second case.

In a first step of the experimental tests, the specimens consisting of panels measuring 30 cm x 30 cm and a thickness of 20.5 mm and representative of the standard comparative product and of that made with the coating according to the invention, were "dirtied" by evenly distributing about 1 g of solid particulate on their surface.

The air flow was recreated through the use of a three-speed bench fan placed at a distance of 50 cm from the specimen. The specimen was in turn placed on a laboratory scale (Gibertini EUROPE 1700 model) with a sensitivity of 1/100 gram. Using a digital anemometer (Testo model 405-V1), the air speed on the specimen surface was measured at the various speed conditions available on the fan: Speed 1 (2 - 2.5 m/s), Speed 2 (2.5 - 3 m/s) Speed 3 (3 - 3.7 m/s).

In Tables 1-4 below, the data collected for each specimen and each type of dust, wherein the measurements were repeated at least 3 times are showed.

Each measurement was carried out leaving the specimen exposed to the air flow for 2 minutes.

In Tables 1-2, the data related to a first test in which the air speed was set to level 1 and level 2, with the two types of standard comparative panel (comp.) and coated according to the invention (inv) were collected.

In Tables 3-4, the data related to a second test in which the air speed was set to level 2 and level 3, with the two types of standard comparative panel (comp.) and coated according to the invention (inv) were collected.

**Table 1**

| **Inv. panel** | **Deposited dust [g]** | **Residue after 2 mins at speed 1 [g]** | **Residue after 2 mins at speed 2 [g]** | **% removed at speed 1** | **% removed at speed 2** |
|---|---|---|---|---|---|
| PU foam dust | 1.02 | 0.13 | 0.02 | 87.25 | 98.04 |
| PU foam dust | 1 | 0.07 | 0 | 93.00 | 100.00 |
| PU foam dust | 1.2 | 0.07 | 0 | 94.17 | 100.00 |
| | | | **AVERAGE** | **91.47** | **99.35** |

**Table 2**

| **Comp. panel** | **Deposited dust [g]** | **Residue after 2 mins at speed 1 [g]** | **Residue after 2 mins at speed 2 [g]** | **% removed at speed 1** | **% removed at speed 2** |
|---|---|---|---|---|---|
| PU foam dust | 1.01 | 0.31 | 0.19 | 69.31 | 81.19 |
| PU foam dust | 1 | 0.22 | 0.14 | 78.00 | 86.00 |
| PU foam dust | 1.08 | 0.28 | 0.16 | 74.07 | 85.19 |
| | | | **AVERAGE** | **73.79** | **84.12** |

**Table 3**

| **Inv. panel** | **Deposited dust [g]** | **Residue after 2 mins at speed 2 [g]** | **Residue after 2 mins at speed 3 [g]** | **% removed at speed 2** | **% removed at speed 3** |
|---|---|---|---|---|---|
| Hygroscopic dust | 1.03 | 0.55 | 0.35 | 46.60 | 66.02 |
| Hygroscopic dust | 1.02 | 0.55 | 0.34 | 46.08 | 66.67 |
| Hygroscopic dust | 1.05 | 0.6 | 0.35 | 42.86 | 66.67 |
| | | | **AVERAGE** | **45.18** | **66.45** |

**Table 4**

| **Comp. panel** | **Deposited dust [g]** | **Residue after 2 mins at speed 2 [g]** | **Residue after 2 mins at speed 3 [g]** | **% removed at speed 2** | **% removed at speed 3** |
|---|---|---|---|---|---|
| Hygroscopic dust | 1.02 | 0.93 | 0.81 | 8.82 | 20.59 |
| Hygroscopic dust | 1.1 | 0.98 | 0.81 | 10.91 | 26.36 |
| Hygroscopic dust | 1.05 | 0.95 | 0.8 | 9.52 | 23.81 |
| | | | **AVERAGE** | **9.75** | **23.59** |

Both tests carried out show that the percentage of dust removed from the surface of a panel according to the invention, by means of a three-speed bench fan, is advantageously and significantly higher than the percentage removed from the surface of a standard comparative panel.

### EXAMPLE 3

### (Evaluation of the self-cleaning activity of the ducts according to the invention - large scale tests)

The comparison between the air distribution ducts according to the present invention and the traditional channeling systems in an experimental plant simulating an aeraulic network allowed the characterization thereof on the basis of the methods described in the EN 15 780 standard.

There are several technical methods for assessing the deposition of solid particulate on the surface of the air ducts. The simplest ones are based on visual inspection, optionally combined with instrumental detection techniques, while the most sophisticated ones provide information on the basis of sampling of the surface depositions using devices specifically designed for this purpose. Irrespective of the analysis techniques, however, it is of fundamental importance that the comparison between different types of air ducts takes place under controlled conditions, in which the maximum reproducibility is ensured under conditions representative of the actual use of an aeraulic network.

The main requirements of a test plant for the comparative assessment of the solid particulate deposition are:
- ability to simulate different operating conditions and carry out variable operating cycles;
- ability to simulate, for a sufficiently long stretch, the direction and section changes of a typical real aeraulic network;
- possibility to ensure the same boundary conditions for the two horizontal test ducts and, in particular, to exactly distribute the airflow in the two end branches; and
- easy access to the end portions for carrying out the instrumental measurements.

The test plant consists of a fan section with gate valve for adjusting the air flow rate, an inlet portion intended for loading and dispersing the particulate, a portion of aeraulic network (ascending, descending and horizontal) with right angle elbows for the simulation of the air distribution, a branching which divides the airflow into equal parts in the two horizontal test ducts with free outflow.

The tests are carried out simultaneously on two ducts of different type having the same section and length. A constant charge of polyurethane dust is introduced immediately downstream of the fan section and conveyed inside the aeraulic network in which the direction changes facilitate, due the flow turbulence, a uniform distribution.

At the end of the loading and ventilation cycle, the qualitative visual analysis is performed at the outlet of the duct and then the sampling with adhesive pad for visual tests with reference scale and the suction of the dusts deposited both at the inlet and at the outlet of the tested duct, along the lower wall, by means of a vacuum pump and a sampling filter (NADCA Vacuum Test).

The experimental plant thus made was used to perform two sets of tests: taking as a reference a duct according to the present invention, the comparison with a standard indoor P3ductal uncoated duct, by the same Applicant, was first carried out, and then with a duct of galvanized metal sheet.

The test procedure was developed with the aim of maintaining the highest degree of reproducibility and was extensively tested in the course of a long series of preliminary tests. At each step of the test, the outlet air speed is measured, so as to check the distribution symmetry of the airflows. The duration of each step as well as the amount of material used for dirtying the ducts are recorded and kept constant. The air distribution network is subjected to cleaning cycles after each test to avoid the accumulation of dust arising from previous tests.

The test procedure consists in loading the circuit with a known amount of polyurethane dust in a set time. Subsequently, an operating cycle is carried out, characterised by an air flow rate higher than that of the loading step but of equal duration. At the end of the cycle, it is waited for the dust still in suspension to deposit on the surface of the ducts and then, the analyses are carried out by the methods specified in EN 15780.

In connection with this step of the experimentation on the ducts according to the invention, three tests were carried out for each test, in the order:
1. visual qualitative analysis (without reference scale) of the inner surface of the duct, highlighting the particulate deposit by means of an ultraviolet light lamp (Wood lamp);
2. visual quantitative analysis (with reference scale) of the inner surface of the duct made through sampling with adhesive pad, high resolution photographic reproduction of the same and counting the surface covered by the dust deposit by means of a graphical analysis software;
3. removal of the dust present in the area bounded by an abutment template by means of a vacuum pump and subsequent assessment of the material deposited in the collection filter through differential weighing.

These methods are characterised by different levels of accuracy and reliability. In absolute terms, the results of the tests carried out with the different methods can give different values, depending on the sampling and analysis technique. However, although with varying degrees of reliability, are all able to provide an indication of the level of dirtying that can be easily expressed in percentage terms in the case of comparative tests.

The analyses carried out in the experimental aeraulic circuit, conducted according to the methods described in the EN 15780 standard for visual tests with reference scale, showed that the ducts according to the invention advantageously have a reduction in the surface deposit of particulate by about 50% compared to the standard indoor P3ductal uncoated duct by the same Applicant and by over 90% compared to that of galvanized metal sheet.

Clearly, those skilled in the art may introduce variants and modifications to the above described invention, in order to satisfy specific and contingent requirements, variants and modifications which fall anyhow within the scope of protection as is defined by the following claims.

## Claims

1. Panel made of pre-insulated material for manufacturing an air distribution duct comprising an insulating layer interposed between opposite surface layers, at least one of said surface layers being superficially provided with a nanotextured and hydrophobic coating obtained from a liquid composition comprising:
a) from 10 to 70% by weight of a formulation comprising a mixture of hydrophobic silica particles, at least one organosilane and at least one solvent;
b) from 20 to 60 % by weight of at least one polymeric resin; and
c) optionally from 0.1 to 2 % by weight of at least one biocide.

2. Panel made of pre-insulated material for manufacturing an air distribution duct according to claim 1, wherein the final thickness of the coating is comprised between 1 and 10 µm.

3. Panel made of pre-insulated material for manufacturing an air distribution duct according to claim 1 or 2, wherein at least one of said surface layers comprises an aluminium sheet.

4. Panel made of pre-insulated material for manufacturing an air distribution duct according to any one of claims 1-3, wherein at least one of said surface layers possesses a smooth or embossed surface or has a thickness comprised between 60 and 500 µm.

5. Panel made of pre-insulated material for manufacturing an air distribution duct according to any one of claims 1-4, wherein said insulating layer comprises at least one from the materials selected from the group comprising: expanded polyurethane, expanded polyisocyanurate, phenolic foam and mineral wools.

6. Panel made of pre-insulated material for manufacturing an air distribution duct according to claim 5, wherein said insulating layer has a density comprised between 40 and 70 kg/m³ and a thickness comprised between 10 and 60 mm.

7. Panel made of pre-insulated material for manufacturing an air distribution duct according to any one of claims 1-6, wherein said liquid composition has a pH comprised between 2 and 5.

8. Panel made of pre-insulated material for manufacturing an air distribution duct according to any one of claims 1-7, wherein said hydrophobic silica particles have an average size comprised between 1 nm and 100 µm or comprise fumed silica, precipitated silica or mixtures thereof and at least one hydrophobizing modifier selected from the group comprising organosilanes and alkylsilanes.

9. Panel made of pre-insulated material for manufacturing an air distribution duct according to any one of claims 1-8, wherein said organosilane is an alkoxysilane, preferably tetraethoxysilane and methyltriethoxysilane.

10. Air distribution duct comprising at least one panel made of pre-insulated material according to any one of claims 1- 9.

11. Process for manufacturing panels made of pre-insulated material for manufacturing an air distribution duct comprising the steps of:
a₁) providing a first aluminium sheet;
b₁) providing a liquid coating composition comprising
a) from 10 to 70% by weight of a formulation comprising a mixture of hydrophobic silica particles, at least one organosilane and at least one solvent;
b) from 20 to 60 % by weight of at least one polymeric resin; and
c) optionally from 0.1 to 2 % by weight of at least one biocide;
c₁) applying said composition onto a face of said first sheet, at a temperature comprised between 15°C and 40°C, so as to obtain a wet coating layer with controlled weight;
d₁) drying the coating layer obtained at a temperature comprised between 90° and 220°C for a time comprised between 10 and 30 seconds so as to obtain a face coated with said first sheet;
e₁) providing a second aluminium sheet;
f₁) associating said first and second aluminium sheet with an insulating layer, so that the face coated with said first sheet forms an outer face of the panel.

12. Process for manufacturing air distribution ducts comprising the steps of providing at least one panel made of pre-insulated material according to any one of claims 1-9.

13. Process for manufacturing air distribution ducts according to claim 12, further comprising the step i) of making suitable weakening lines on the panel and the step ii) of suitably bending the panel according to a bending line transversal to the weakening lines, optionally the step of applying an amount of adhesive at the weakening lines or the step of associating said at least one panel with one or more panels made of pre-insulated material so as to form a duct.

## Patentansprüche

1. Ein aus vorisoliertem Material hergestelltes Paneel zur Herstellung einer Luftverteilungsleitung, umfassend eine Isolierschicht, die zwischen gegenüberliegenden Oberflächenschichten eingefügt ist, wobei wenigstens eine der Oberflächenschichten oberflächlich mit einer nanostrukturierten und hydrophoben Beschichtung versehen ist, die aus einer flüssigen Zusammensetzung erhalten ist, umfassend:
a) von 10 bis 70 Gew.-% einer Formulierung, umfassend eine Mischung aus hydrophoben Siliciumdioxidpartikeln, wenigstens ein Organosilan und wenigstens ein Lösungsmittel;
b) von 20 bis 60 Gew.-% wenigstens eines Polymerharzes; und
c) wahlweise von 0,1 bis 2 Gew.-% wenigstens eines Biocids.

2. Das aus vorisoliertem Material hergestellte Paneel zur Herstellung einer Luftverteilungsleitung nach Anspruch 1, wobei die Enddicke der Beschichtung zwischen 1 und 10 µm umfasst.

3. Das aus vorisoliertem Material hergestellte Paneel zur Herstellung einer Luftverteilungsleitung nach Anspruch 1 oder 2, wobei wenigstens eine der Oberflächenschichten ein Aluminiumblech umfasst.

4. Das aus vorisoliertem Material hergestellte Paneel zur Herstellung einer Luftverteilungsleitung nach einem der Ansprüche 1-3, wobei wenigstens eine der Oberflächenschichten eine glatte oder geprägte Oberfläche besitzt oder eine Dicke zwischen 60 und 500 µm aufweist.

5. Das aus vorisoliertem Material hergestellte Paneel zur Herstellung einer Luftverteilungsleitung nach einem der Ansprüche 1-4, wobei die Isolierschicht wenigstens eines der Materialien umfasst, ausgewählt aus der Gruppe bestehend aus: expandiertem Polyurethan, expandiertem Polyisocyanurat, Phenolschaum und Steinwolle.

6. Das aus vorisoliertem Material hergestellte Paneel zur Herstellung einer Luftverteilungsleitung nach Anspruch 5, wobei die Isolierschicht eine Dichte zwischen 40 und 70 kg/m³ und eine Dicke zwischen 10 und 60 mm aufweist.

7. Das aus vorisoliertem Material hergestellte Paneel zur Herstellung einer Luftverteilungsleitung nach einem der Ansprüche 1-6, wobei die flüssige Zusammensetzung einen pH-Wert zwischen 2 und 5 aufweist.

8. Das aus vorisoliertem Material hergestellte Paneel zur Herstellung einer Luftverteilungsleitung nach einem der Ansprüche 1-7, wobei die hydrophoben Siliciumdioxidpartikel eine durchschnittliche Größe zwischen 1 nm und 100 µm aufweisen oder pyrogenes Siliciumdioxid, Fällungssiliciumdioxid oder Mischungen davon und wenigstens einen Hydrophobisierungsmodifikator umfassen, ausgewählt aus der Gruppe umfassend Organosilane und Alkylsilane.

9. Das aus vorisoliertem Material hergestellte Paneel zur Herstellung einer Luftverteilungsleitung nach einem der Ansprüche 1-8, wobei das Organosilan ein Alkylsilan ist, vorzugsweise Tetraethoxysilan und Methyltriethoxysilan.

10. Luftverteilungsleitung, umfassend wenigstens ein aus vorisoliertem Material hergestelltes Paneel einer nach einem der Ansprüche 1-9.

11. Verfahren zur Herstellung von aus vorisoliertem Material hergestellten Paneelen zur Herstellung einer Luftverteilungsleitung umfassend folgende Schritte:
a₁) Bereitstellen eines ersten Aluminiumbleches;
b₁) Bereitstellen einer flüssigen Beschichtungszusammensetzung umfassend
a) von 10 bis 70 Gew.-% einer Formulierung, umfassend eine Mischung aus hydrophoben Siliciumdioxidpartikeln, wenigstens ein Organosilan und wenigstens ein Lösungsmittel;
b) von 20 bis 60 Gew.-% wenigstens eines Polymerharzes; und
c) wahlweise von 0,1 bis 2 Gew.-% wenigstens eines Biocids;
c₁) Aufbringen der Zusammensetzung auf einer Seite des ersten Bleches bei einer Temperatur zwischen 15 °C und 40 °C, um eine nasse Beschichtungsschicht mit gesteuertem Gewicht zu erhalten;
d₁) Trocknen der erhaltenen Beschichtungsschicht bei einer Temperatur zwischen 90 °C und 220 °C für eine Zeit zwischen 10 und 30 Sekunden, um eine mit dem ersten Blech beschichtete Seite zu erhalten;
e₁) Bereitstellen eines zweiten Aluminiumbleches;
f₁) Verbinden des ersten und des zweiten Aluminiumbleches mit einer Isolierschicht, so dass die mit dem ersten Blech beschichte Seite eine Außenseite des Paneels bildet.

12. Verfahren zur Herstellung von Luftverteilungsleitungen, umfassend die Schritte des Bereitstellens von wenigstens einem Paneel aus vorisoliertem Material nach einem der Ansprüche 1-9.

13. Verfahren zur Herstellung von Luftverteilungsleitungen nach Anspruch 12, ferner umfassend den Schritt i) des Herstellens von geeigneten Schwächungslinien auf dem Paneel und den Schritt ii) des geeigneten Biegens des Paneels gemäß einer Biegelinie quer zu den Schwächungslinien, wahlweise den Schritt des Aufbringens einer Menge an Klebstoff an den Schwächungslinien oder den Schritt des Verbindens des wenigstens einen Paneels mit einem oder mehreren aus dem vorisolierten Material hergestellten Paneelen, derart, dass eine Leitung gebildet wird.

## Revendications

1. Panneau fabriqué d'un matériau pré-isolé pour la fabrication d'un conduit de distribution d'air comprenant une couche isolante intercalée entre des couches de surface opposées, au moins l'une des dites couches de surface étant superficiellement dotée d'un revêtement nanotexturé hydrophobe obtenu à partir d'une composition liquide contenant :
a) de 10 à 70 % en poids d'une formulation comprenant un mélange de particules de silice hydrophobe, au moins un organosilane et au moins un solvant ;
b) de 20 à 60 % en poids d'au moins une résine polymère ; et
c) éventuellement de 0,1 à 2 % en poids d'au moins un biocide.

2. Panneau fabriqué d'un matériau pré-isolé pour la fabrication d'un conduit de distribution d'air selon la revendication 1, dans lequel l'épaisseur finale du revêtement est comprise entre 1 et 10 µm.

3. Panneau fabriqué d'un matériau pré-isolé pour la fabrication d'un conduit de distribution d'air selon la revendication 1 ou 2, dans lequel au moins l'une des dites couches de surface comprend une feuille d'aluminium.

4. Panneau fabriqué d'un matériau pré-isolé pour la fabrication d'un conduit de distribution d'air selon l'une quelconque des revendications de 1 à 3, dans lequel au moins l'une des dites couches de surface possède une surface lisse ou gaufrée ou bien elle a une épaisseur comprise entre 60 et 500 µm.

5. Panneau fabriqué d'un matériau pré-isolé pour la fabrication d'un conduit de distribution d'air selon l'une quelconque des revendications de 1 à 4, dans lequel ladite couche isolante comprend au moins l'un des matériaux choisis du groupe comprenant : le polyuréthane expansé, le polyisocyanurate expansé, la mousse phénolique et les laines minérales.

6. Panneau fabriqué d'un matériau pré-isolé pour la fabrication d'un conduit de distribution d'air selon la revendication 5, dans lequel ladite couche isolante a une densité comprise entre 40 et 70 kg/m³ et une épaisseur comprise entre 10 et 60 mm.

7. Panneau fabriqué d'un matériau pré-isolé pour la fabrication d'un conduit de distribution d'air selon l'une quelconque des revendications de 1 à 6, dans lequel ladite composition liquide a un pH compris entre 2 et 5.

8. Panneau fabriqué d'un matériau pré-isolé pour la fabrication d'un conduit de distribution d'air selon l'une quelconque des revendications de 1 à 7, dans lequel dites particules de silice hydrophobe ont une taille moyenne comprise entre 1 nm et 100 µm ou comprennent de la silice fumée, la silice précipitée ou des mélanges de ces dernières et au moins un modificateur d'hydrofugation choisi parmi les organosilanes et les alkylsilanes.

9. Panneau fabriqué d'un matériau pré-isolé pour la fabrication d'un conduit de distribution d'air selon l'une quelconque des revendications de 1 à 8, dans lequel ledit organosilane est un alkoxysilane, de préférence tétraéthoxysilane et méthyltriéthoxysilane.

10. Conduit de distribution d'air comprenant au moins un panneau fabriqué d'un matériau pré-isolé selon l'une quelconque des revendications de 1 à 9.

11. Procédé de fabrication de panneaux fabriqués d'un matériau pré-isolé pour la fabrication d'un conduit de distribution d'air comprenant les étapes suivantes :
a1) fournir une première feuille d'aluminium ;
b1) fournir une composition de revêtement liquide comprenant
a) de 10 à 70 % en poids d'une formulation comprenant un mélange de particules de silice hydrophobe, au moins un organosilane et au moins un solvant ;
b) de 20 à 60 % en poids d'au moins une résine polymère ; et
c) éventuellement de 0,1 à 2 % en poids d'au moins un biocide ;
c1) appliquer ladite composition sur une face de ladite première feuille, à une température comprise entre 15 °C et 40 °C, de telle sorte à obtenir une couche de revêtement mouillée avec un poids contrôlé ;
d1) sécher la couche de revêtement obtenue à une température comprise entre 90° et 220 °C pour une durée comprise entre 10 et 30 secondes de façon à obtenir une face revêtue de ladite première feuille ;
e1) fournir une deuxième feuille d'aluminium ;
f1) associer ladite première et deuxième feuille d'aluminium au par l'intermédiaire d'une couche isolante, de telle sorte que la face revêtue de la première feuille forme une face extérieure du panneau.

12. Procédé de fabrication de conduits de distribution d'air comprenant les étapes consistant à fournir au moins un panneau fabriqué d'un matériau pré-isolé selon l'une quelconque des revendications de 1 à 9.

13. Procédé de fabrication de conduits de distribution d'air selon la revendication 12, consistant en outre i) à fabriquer des lignes d'affaiblissement appropriées sur le panneau et ii) à plier de façon appropriée le panneau suivant la ligne de pliage perpendiculaire aux lignes d'affaiblissement, et éventuellement à appliquer une quantité d'adhésif aux lignes d'affaiblissement ou à associer au moins ledit panneau à un ou plusieurs panneaux fabriqués d'un matériau pré-isolé de sorte à former un conduit.
